# EUROPÄISCHE PATENTSCHRIFT

(11) **EP 1 072 542 B1**
(45) Veröffentlichungstag und Bekanntmachung des Hinweises auf die Patenterteilung: **02.01.2004**
(21) Anmeldenummer: 99122638.2
(22) Anmeldetag: 13.11.1999
(51) Int. Cl.: B65G 61/00, B62D 65/00

(54) **Stapelanlage für Pressen zur Blechformung**
Pile-up system for sheet metal forming presses
Système d' empilage pour presses de façonnage des tôles

(30) Priorität: 23.07.1999 DE 19934618
(43) Veröffentlichungstag der Anmeldung: 31.01.2001
(73) Patentinhaber: ThyssenKrupp Drauz GmbH, 74076 Heilbronn (DE)
(72) Erfinder: Bünning, Klaus, 09113 Chemnitz (DE); Rohland, Jörg, 09119 Chemnitz (DE)
(74) Vertreter: Findeisen, Andreas

(56) Entgegenhaltungen:
- EP-A- 0 727 345
- EP-A- 0 761 578
- WO-A-90/00146
- DE-A- 19 826 270
- US-A- 4 960 969

## Beschreibung

Die Erfindung betrifft eine Stapelanlage für Pressen zur Blechumformung, insbesondere zum Stapeln von Karosserieteilen für Kraftfahrzeuge und anderen großen Blechteilen.

Stufenpressen stoßen mit kurzen Taktzeiten eine große AnzahL an Pressteilen aus. Je nach Gestaltung und Größe der Pressteile sind in der Stufenpresse ein oder zwei Reihen von Umformwerkzeugen angeordnet. Zwei Reihen werden beispielsweise dann verwendet, wenn gleichzeitig das Innen- und das Außenteil einer Kraftfahrzeugtür hergestellt werden soll. Das Handling dieser beispielsweise genannten Teile ist deswegen problematisch, weil das Innenteil überwiegend aus schmalen Rahmenstreifen besteht, während das Außenteil größere geschlossene Flächen aufweist.
Die Folge davon ist, dass das Handling nach der Presse überwiegend manuell erfolgen muss. Je nach Taktzeit der Presse muss eine größere Anzahl Werker die Teile von einem Förderband entnehmen und geordnet in Stapelbehälter verbringen. Ist nur eine Reihe von Umformwerkzeugen in der Presse in Anwendung, so werden nur gleiche Teile ausgestoßen, die jeweils auch gleiche Lage haben. Für solche Arbeitsaufgaben ist bekannt, Industrieroboter mit werkstückangepassten Saugerspinnen einzusetzen, die die gleichartigen Pressteile in Stapelbehältern ablegen. Universell einsetzbare Stapelanlagen für eine VieLzahl von Werkstückausbildungen sind nicht bekannt.

Eine bekannte Vorrichtung zum Stapeln von Formteilen wird beispielsweise durch die WO 90 00146 A gezeigt.

Es ist Aufgabe der Erfindung, eine gattungsgemäße Stapelanlage für Pressen zur Blechumformung, insbesondere zum Stapeln von Karosserieteilen für Kraftfahrzeuge und anderen großen Blechteilen zu schaffen, die universell für eine Vielzahl von Werkstücken und technologische Herstellungsabläufe einsetzbar ist und die im automatischen Betrieb leere Stapelbehälter bereitstellt und volle Stapelbehälter entfernt. Die Stapelanlage soll an unterschiedliche Platzverhältnisse anpassbar sein. Die Herstellung der Stapelanlage soll mit einem wirtschaftlichen Aufwand möglich sein.

Die Aufgabe wird erfindungsgemäß durch die Merkmale des Patentanspruches 1 gelöst. Die Unteransprüche beschreiben Ausgestaltungen der Erfindung, die eine vorteilhafte Anpassung an unterschiedliche räumliche Gegebenheiten ermöglichen.

Durch die streifenförmige Teilung des Förderbandes ist eine vorteilhafte einfache Gestaltung der Zentrierstationen möglich. Die vier beidseitig des Förderbandes angeordneten Stapelstationen sind die Voraussetzungen für den kontinuierlichen An- und Abtransport der leeren und vollen Stapelbehälter und für das Abstapeln der Anzahl von Pressteilen, die mit einem Arbeitstakt der Presse hergestellt werden. Dadurch werden kurze Wechselzeiten ermöglicht. Die alternativ vorgesehenen Hubgerüste lassen den An- und Abtransport von übereinander gestellten Stapelbehältern zu und entlasten so den Staplerverkehr.
Die Verwendung von Schwenktischen für die übereinander gestellten Stapelbehälter schafft eine vorteilhafte Anpassbarkeit an die räumlichen Möglichkeiten für den Staplerverkehr. Die Zuordnung der Stapelroboter sowohl beider Seiten des Förderbandes und der dort angeordneten Stapelstationen schaffen die Option für das Stapeln von sowohl einzelnen als auch paarweise ausgeworfenen Pressteilen.
Bei V-förmiger Anordnung der beiden Förderbänder zueinander ist es durch eine entsprechende Wahl des eingeschlossenen Winkels möglich, den Platzbedarf von der Längsrichtung in die Breite zu verlegen. Dadurch entsteht eine bessere Anpassbarkeit an die räumlichen Gegebenheiten. Die V-förmige Anordnung schafft weiterhin Raum, um die Stapelroboter mit ihren Drehtischen zwischen den beiden Förderbändern aufzustellen. Dadurch bedarf es keiner Verlängerung der Förderbänder für Handstapelplätze. Diese können jetzt an den Außenseiten der Förderbänder angeordnet sein. Anstelle der Drehtische sind bei bestimmten Platzverhältnissen vorteilhaft zweietagige lineare Stapelbehälterzuführstrecken einsetzbar.

In den Zeichnungen ist die Erfindung an zwei Ausführungsbeispielen erläutert. Es zeigen
- Fig. 1: einen schematischen Grundriss der Stapelanlage.
- Fig. 2: die Stapellogistik für paarweise ausgeworfene Pressteile, die ungleich gestaltet sind,
- Fig. 3: Schema der Schrittfolge bei Stapelbehälterwechsel,
- Fig. 4: einen schematischen Grundriss der Stapelanlage mit V-förmiger Anordnung der Förderbänder.

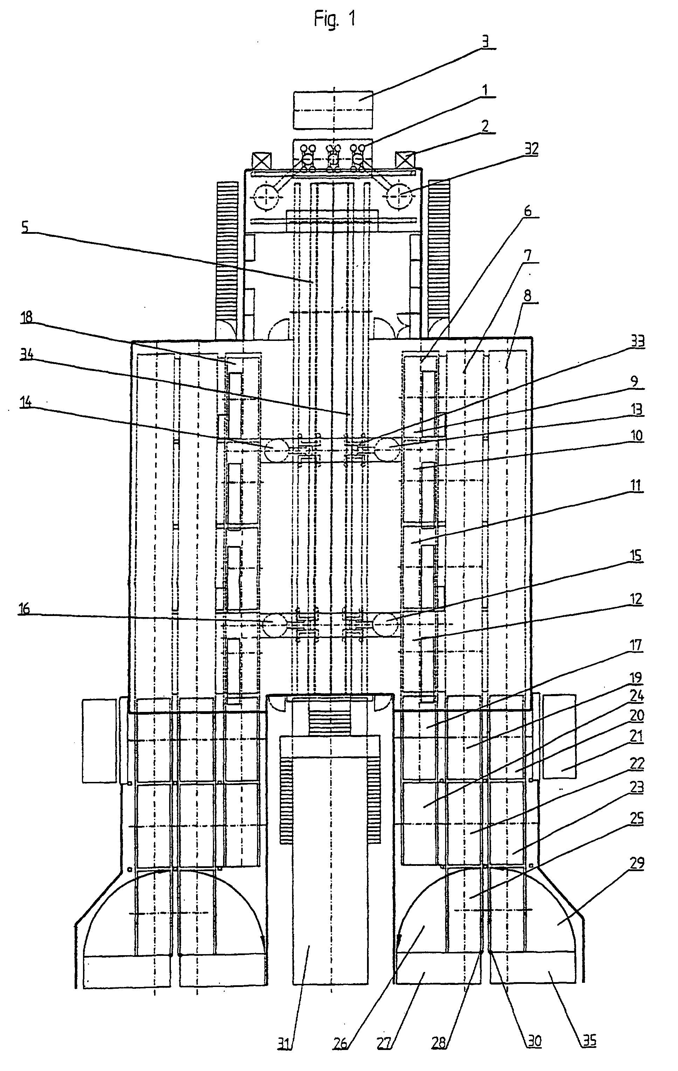

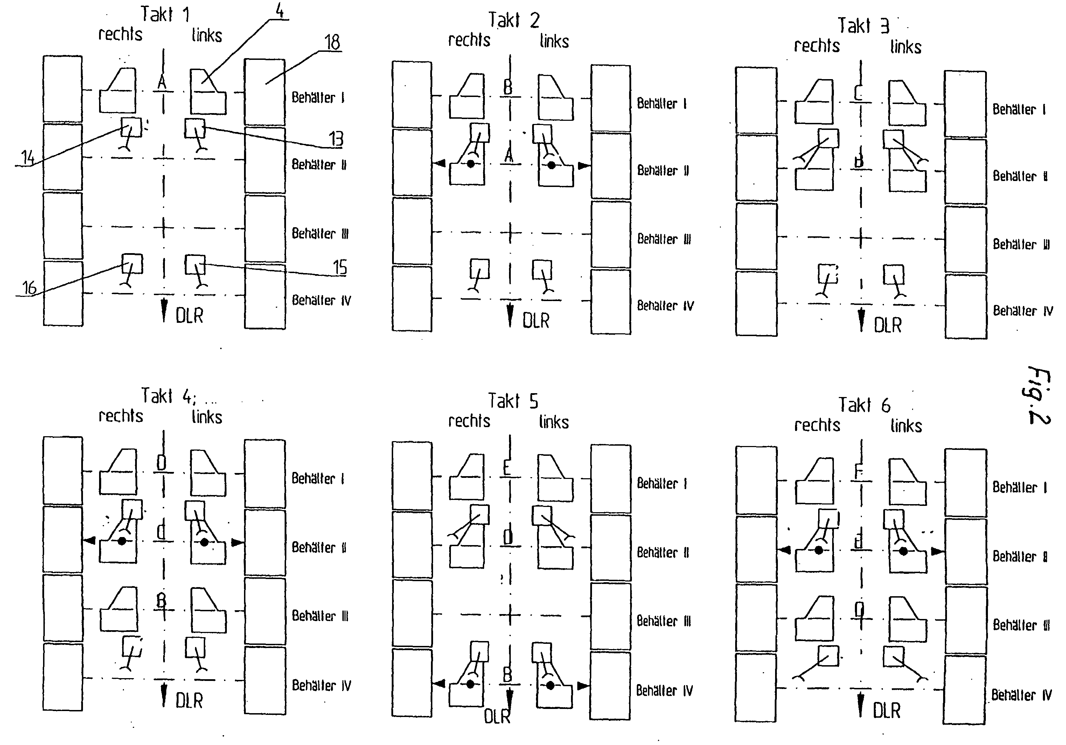

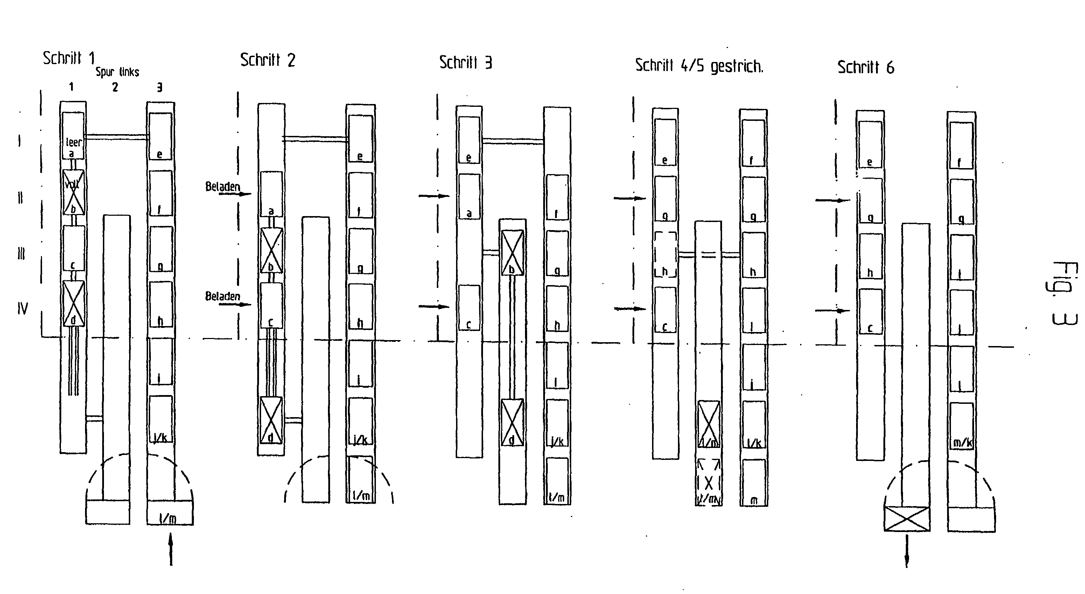

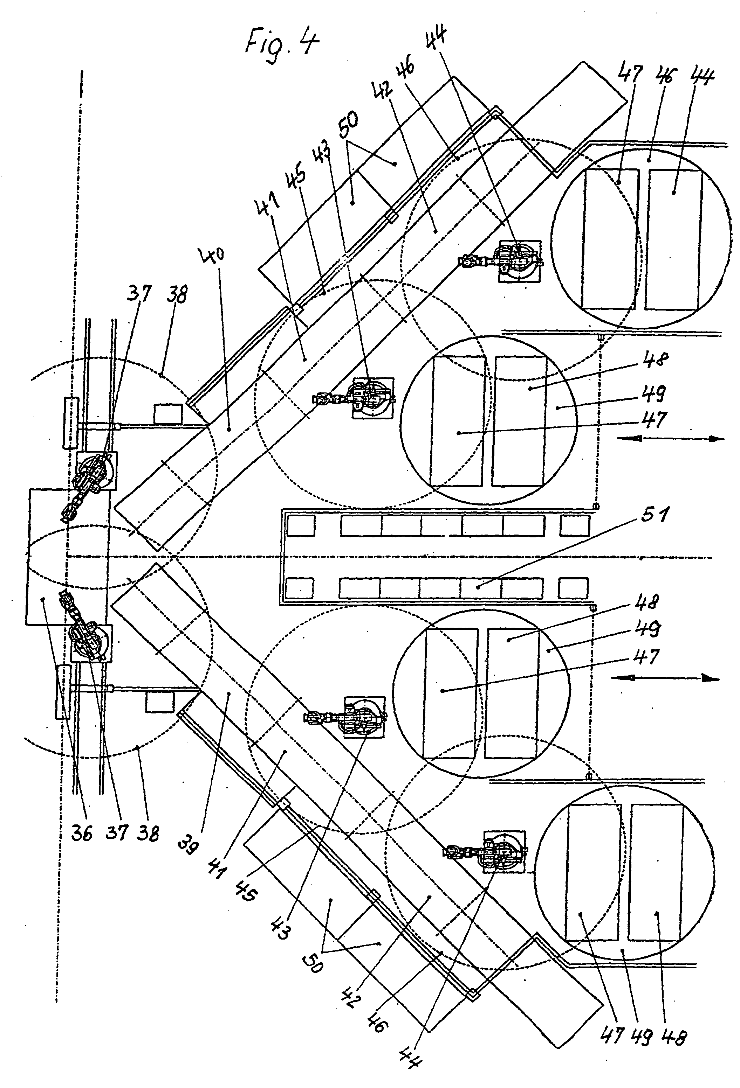

Auf einer Ablage 1 zwischen den Seitenständern 2 einer Großraumstufenpresse 3 Legt diese die fertiggestellten Pressteile 4 ab (Fig.1). Nahe der Ablage 1 ist eine vordere Umlenkrolle eines Förderbandes 5 angeordnet. Die hintere Umlenkrolle befindet sich in Durchlaufrichtung nach einer vierten Stapelstation 12. Das Förderband 5 besteht aus sechs nebeneinander liegenden Teilförderbändern, von denen das erste und sechste Teilförderband seitenverstellbar und das zweite und fünfte Teilförderband höhenverstellbar sind.
Längsantrieb der Teilförderbänder erfolgt durch einen NC-Antrieb im Arbeitstakt der Presse 3.
Ihre Seiten- und Höhenverstellung erfolgt ebenfalls über NCgesteuerte Antriebe. Parallel zum Förderband 5 sind auf jeder Seite je eine Behälterbeladestrecke 6 und zwei Behältertransportstrecken 7;8 eingerichtet. Sie nehmen die leeren bzw. vollen Behälter 18 auf.
Die Strecken sind unterschiedlich lang ausgeführt und reichen bis an die Stapelbehältereingabe bzw. -ausgabe. Die Behälterbeladestrecken 6 sind unmittelbar neben dem Förderband 5 liegend angeordnet. Ihre Enden zeigen in Richtung Presse 3. Von diesem Ende aus sind in Durchlaufrichtung vier aneinander anschließende Stapelstationen 9;10;11;12 auf jeder Behälterbeladestrecke 6 ausgeführt. Zwischen jeweils zwei gegenüber liegenden Stapelstationen, vorzugsweise zwischen den Stationen 10 und 12, sind hängend über dem Förderband 5 je zwei Stapelroboter 13;14 bzw. 15;16 angebracht, an dessen Händen werkstückangepasste Saugerspinnen 33 schnell wechselbar befestigt sind. Weiterhin ist jeweils zwischen zwei gegenüber liegenden Stapelstationen unterhalb des Förderbandes 5 eine nicht dargestellte Zentrierstation 34 vorhanden, die im Arbeitstakt der Presse 3 einschwenkbar ist. Nach oben wirken in der Zentrierstation je Werkstück vier Zentrieranschläge, die in den Bandlücken beispielsweise pneumatisch in Position gebracht werden und mittels NC-gesteuerter Verstellachsen gegeneinander auf die jeweilige Werkstücklänge eingestellt werden.
Nach jeder vierten Stapelstation 12 sind in Durchlaufrichtung in der Strecke 6 zwei Leerplätze 17;24 zur Aufnahme gefüllter Behälter angeordnet. Strecke 7 enthält eine Leerstation 19 für gefüllte Behälter und Strecke 8 eine Leerstation 20 für Leere Behälter, die gleichzeitig zum Kontrollieren und zum Ausschleusen fehlerhafter Behälter in Pos. 21 dient. Anschließend an die Leerstation 19 in der Strecke 7 ist ein Hubgerüst 22 angeordnet. Es nimmt einen vollen Behälter 18 aus der Station 24 auf und fördert ihn senkrecht nach oben, um dem zweiten vollen Behälter aus der Station 19 Platz zu machen, der nun gemeinsam mit dem darüber befindlichen Behälter zur Station 25 gebracht wird. Station 25 ist Teil eines Schwenktisches 26, auf dem die zwei vollen und übereinander gestapelten Behälter 18 durch eine Vierteldrehung um Punkt 28 aus der Behältertransportstrecke 7 quer zur Durchlaufrichtung in die Ausgabelage 27, beispielsweise für Gabelstapler, gebracht werden. Anschließend an die Leerstation und Kontrollstation 20 in der Transportstrecke 8 ist ein Hubgerüst 23 angeordnet. Es nimmt zwei übereinander gestapelte Behälter aus dem Schwenktisch 29 auf, die vorher beispielsweise durch Gabelstapler in der Position 35 aufgesetzt und anschließend durch eine Vierteldrehung in die Transportstrecke 8 eingeschwenkt wurden. Sie werden entgegengesetzt zur Durchlaufrichtung in Strecke 8 vereinzelt, indem erst der untere Behälter 18 ausgefahren wird, dem dann durch Absenken im Hubgerüst der darüber befindliche Behälter 18 folgt. Für nicht stapelbare Pressteile 4 ist anschließend an die Teilförderbänder 5 ein Breitförderband 31 angeordnet, welches die Pressteile 4 in den Ein-/Ausgabebereich zur manuellen Entnahme bringt. Außerdem können bei Ausschaltung der Roboter 13;14;15;16 und der Zentrieranschläge die auf den Teilförderbändern 5 getakteten Pressteile 4 auch von Hand entnommen und in den Stapelstationen 9;10;11;12 der Behälterbeladestrecke 6 in die bereitgestellten Behälter gestapelt werden. Zu diesem Zweck ist zwischen Teilförderbändern 5 und Stapelstationen 9;10;11;12 genügend Freiraum gelassen worden. Der automatische Behältertransport ist unter geeigneten Sicherheitsvorkehrungen möglich.
Bei der V-förmigen Anordnung der Förderbänder (Fig.4) ist zwischen den Seitenständern einer nicht gezeichneten Großraumstufenpresse eine Ablage 36 angeordnet, auf die die fertiggestellten Pressteile abgelegt werden. Beidseitig der Ablage 36 ist je ein Industrieroboter 37 aufgestellt, an dessen Händen werkstückangepasste Saugerspinnen leicht wechselbar befestigt sind. Die Schwenkkreise 38 der Industrieroboter 37 überdecken die Ablage 36 und die Anfangsbereiche von zwei Förderbändern 39;40.
Diese beiden Förderbänder 39;40 sind V-förmig zueinander angeordnet und schließen einen Winkel von vorzugsweise 90 Grad ein. Ihre vorderen Umlenkrollen sind in unmittelbarer Nähe der Ablage 36 angeordnet. Beide Förderbänder 39;40 werden in Längsrichtung mittels je eines NC-Antriebes im Arbeitstakt der Großraumstufenpresse angetrieben. An jedem Förderband 39;40 sind nacheinander zwei Stapelstationen 41;42 angeordnet. Dort befindet sich unter dem Förderband 39;40 je eine Zentrierstation für die zu entnehmenden Pressteile. Jeder Stapelstation 41;42 ist ein Stapelroboter 43;44 zugeordnet, an dessen Hand eine werkstückangepasste Saugerspinne schnell wechselbar befestigt ist. Der Schwenkkreis 45;46 des Stapelroboters 43;44 überdeckt die Stapelstation 41;42 am Förderband 39;40 und einen vorderen Stapelbehälter 47, der zusammen mit einem hinteren Stapelbehälter 48 auf einem Drehtisch 49 abgestellt ist. Der Drehtisch 49 ist derart zwischen den Förderbändern 39;40 und zur zweiten Stapelstation 42 angeordnet, daß der hintere Stapelbehälter 48 durch ein Stapelfahrzeug entnommen und anschließend ein leerer Stapelbehälter 48 auf den Drehtisch 49 abgestellt werden kann. Nach der zweiten Stapelstation 42 ist das Förderband 39;40 noch etwas verlängert, um dort fehlerhafte Pressteile ausschleusen zu können.
An den Außenseiten der Förderbänder 39;40 sind im Bereich der Stapelstationen 41;42 Stapelbehälter 50 aufgestellt, in die im Bedarfsfalle von den Förderbändern 39;40 Pressteile per Hand gestapelt werden können. Im Zentrum zwischen den Förderbändern 39;40 sind eine Anzahl von Schaltschränken 51 aufgestellt, die u.a. die Robotersteuerungen und die Steuerungen für die NC-Antriebe aufnehmen.
Je nach den vorhandenen räumlichen Gegebenheiten am Einsatzort lässt sich der räumliche Bedarf durch Veränderung des eingeschlossenen Winkels zwischen den Förderbändern 39;40 im Zuge der Projektierung variieren. Obwohl alle Winkel bis 180 Grad realisierbar sind, hat sich in der Praxis ein Winkelbereich von 70 bis 110 Grad als vorteilhaft erwiesen.
Weiterhin ist für den Wechsel der Stapelbehälter 47;48 zum Drehtisch 49 eine nicht gezeichnete zweietagige lineare Stapelbehälterzuführstrecke eine Alternative, die entsprechend der vorhandenen betrieblichen Transportorganisation einsetzbar ist.
Entsprechend der erforderlichen Stapelleistung ist die Stapelanlage mit zwei oder mehreren Stapelplätzen 41;42 ausführbar.

Die Arbeitsweise der Anlage nach Fig.1 ist folgende:
Auf der Ablage 1 zwischen den Seitenständern 2 der Presse 3 werden von dieser die fertig gestellten Pressteile 4 abgelegt. Das Ausführungsbeispiel geht von jeweils zwei ungleichen Teilen aus. Durch zwei Entnahmeroboter 32 werden diese Teile 4 im Arbeitstakt der Presse 3 auf je eine Gruppe der sechs Teilförderbänder 5 abgelegt und durch diese im Arbeitstakt der Presse 3 zu den ersten Beladestationen 9 transportiert. Zu diesem Zeitpunkt sind die beiden Behälterbeladestrecken 6 sowie die Transportstrecken 8, deren Leerstationen 20, die dazugehörigen Hubgerüste 23 und Schwenktische 29 mit leeren Stapelbehältern 18 gefüllt. Wie in Fig.2 dargestellt, erfolgt ein weiterer Takt zur zweiten Beladestation 10. In diesem zweiten Takt werden das Linke und rechte Pressteil 4 - in Durchlaufrichtung - in der zweiten Beladestation 10 durch die dortigen Zentrierstationen 34 in ihrer Lage fixiert und durch die Stapelroboter 13;14 der zweiten Beladestation 10 entnommen und in die Stapelbehälter 18 gestellt.

In die erste Beladestation 9 sind gleichzeitig zwei neue Pressteile 4 gebracht worden.
Beim dritten Takt werden das rechte und Linke Pressteil 4 der ersten Beladestation 9 zur zweiten Beladestation 10 weiter transportiert und zwei neue Pressteile 4 in die erste Beladestation 9 gebracht.
Im vierten Takt werden das rechte und Linke Pressteil 4 von der zweiten Beladestation 10 zur Beladestation 11 transportiert.
Zwei neue Pressteile 4 werden zur ersten Beladestation 9 gebracht. Die rechten und linken Pressteile 4 der zweiten Beladestation 10 werden zentriert und durch die dortigen Stapelroboter 13;14 gleichzeitig entnommen und in die jeweiligen Stapelbehälter 18 gestellt. Im fünften Takt werden das rechte und Linke Pressteil 4 der ersten Beladestation 9 zur zweiten Beladestation 10 und das linke und rechte Pressteil 4 der dritten Beladestation 11 zur vierten Beladestation 12 transportiert.

Zwei neue Pressteile 4 werden zur ersten Beladestation 9 gebracht. Die linken und rechten Pressteile 4 der vierten Beladestation 12 werden zentriert und gleichzeitig durch die dortigen Stapelroboter 15;16 entnommen und in die jeweiligen Stapelbehälter 18 gestellt.

Die gefüllten und leeren Behälter werden nun nach dem Schema in Fig.3 transportiert.

Im Schritt 1 ist die Startposition für den Behälterwechsel dargestellt. Behälter 18b;18d sind gefüllt. Die leeren Behälter 18a;18c stehen für den Wechsel von Beladestation 9;11 in Beladestation 10;12 bereit. Die Transportstrecke 7 ist leer, die Transportstrecke 8 mit leeren Behältern 18e bis 18m gefüllt, wobei die Behälter 18j;18k und 18l;18m übereinander angeordnet sind. Im Schritt 2 werden alle vier Behälter 18a;18b;18c;18d gleichzeitig in Durchlaufrichtung transportiert.

Die Behälter 18a;18b;18c legen dabei einen Weg zurück, der einem Abstand zwischen den Behältermitten entspricht. Behälter 18d legt den doppelten Weg zurück, um in die Station 18 zu gelangen. Das wird durch den Einsatz geeigneter Mittel, zum Beispiel eines Hubdopplungsmechanismus erreicht. Die leeren Behälter 18a;18c befinden sich nun in den Beladestationen 10;12 und stehen für den Beladerhythmus zur Verfügung. Die vollen Behälter 18b;18d befinden sich in Wechselposition.

Im Schritt 3 werden Transporte quer zur Durchlaufrichtung durchgeführt. Behälter 18e gelangt in Beladestation 9 der Beladestrecke 6, BehäLter 18b gelangt in die Transportstrecke 7 und Behälter 18d in das Hubgerüst 22, wo er sofort angehoben wird.

Im Schritt 4 wird der gefüllte Behälter 18b in das Hubgerüst 22 transportiert, so dass Behälter 18d und 18b übereinander gestellt sind. Ferner erfolgt im Schritt 4 der Transport aller leeren Behälter 18f;g;h;i;j;l entgegen der Durchlaufrichtung um den Abstand zwischen zwei Behältermitten.

Im Schritt 5 erfolgt der Transport der übereinander gestellten gefüllten Behälter 18b;18d auf den Schwenktisch 26 und der Quertransport des Behälters 18h in Beladestation 11.

Im Schritt 6 erfolgt ein Transport der leeren Behälter 18i;j;m in der Transportstrecke 8 um den Abstand zwischen zwei Behältermitten entgegen der Durchlaufrichtung.

Die übereinander stehenden Stapelbehälter 18b;18d werden in dem Schwenktisch um 90 Grad geschwenkt, von Gabelstaplern entnommen und zum Lager gefahren.

Diese Vorgänge laufen in gleicher Weise beidseitig des Förderbandes 5 ab. Dieser Ablauf bei der gleichzeitigen Herstellung von zwei ungleichen Pressteilen 4 verändert sich nur unwesentlich, wenn bei einem Arbeitstakt nur ein Pressteil 4 hergestellt wird. Hierbei werden nacheinander die ankommenden Pressteile durch die Entnahmeroboter 32 einmal im Uhrzeigersinn um 90 Grad gedreht auf dem Band 5 abgelegt und im nächsten Takt entgegen dem Uhrzeigersinn und so weiter.

In den Beladestationen 10 und 12 ergreifen die Roboter 13;14 bzw. 15;16 wechselseitig die so bereit gestellten und zentrierten Pressteile und stapeln sie in den Behältern 18 ab. Der Behälterwechsel erfolgt in der oben beschriebenen Art.

Die Arbeitsweise der Stapelanlage nach Fig.4 unterscheidet sich wie folgt:
Das Ausführungsbeispiel geht auch von zwei ungleichen Pressteilen aus, die gleichzeitig hergestellt und auf der Ablage 36 abgelegt werden.
Im Wechsel entnehmen die beiden Industrieroboter 37 ein Pressteil und Legen es auf das ihnen zugeordnete Förderband 39;40 ab. Dieses fördert im Arbeitstakt der Stufenpresse die auf ihr Liegenden Pressteile im Wechsel zum ersten oder zweiten Stapelplatz 41;42. Dort hebt die jeweilige Zentrierstation das Pressteil an, der Stapelroboter 43;44 erfaßt das Pressteil mit der Saugerspinne, hebt es von der Zentrierstation ab und schwenkt es über den Stapelbehälter 47. Dort legt er es in der gewünschten Lage ab. Nach Füllung des vorderen Stapelbehälters 47 wird der Drehtisch 44 um 180 Grad gedreht, sodaß ein leerer Stapelbehälter 48 in die vordere Stellung gebracht wird. Der gefüllte Stapelbehälter 47 wird auf der hinteren Stellung des Drehtisches 49 mittels Gabelstaplers gegen einen leeren Stapelbehälter 48 ausgetauscht.

Es liegt im Rahmen der Erfindung, die Pressteile 4 in die Stapelbehälter 18;47 zu legen. Weiterhin kann die Anwendung an sich bekannter automatischer Spinnen-, Zentriermittel oder Roboter-Wechseleinrichtungen vorgesehen werden.

Die erfindungsgemäße Stapelanlage ist für alle Arten von Pressen zur Blechumformung vorteilhaft anwendbar, insbesondere Stufenpressen, Großraumstufenpressen, Transferpressen, Saugerpressen, Pressenlinien und Einfachpressen.

### Aufstellung der Bezugszeichen

- 1: Ablage
- 2: Seitenständer
- 3: Großraumstufenpresse
- 4: Pressteil
- 5: Förderband
- 6: Behälterbeladestrecke
- 7/8: Behältertransportstrecke
- 9/10/11/12: Stapelstation
- 13/14/15/16: Stapelroboter
- 17: Leerstation
- 18: Stapelbehälter
- 19: Leerstation
- 20: Leerstation
- 21: Ausschleusstation
- 22/23: Hubgerüst
- 24: Leerstation
- 25: Schwenktischposition in Transportrichtung
- 26: Schwenktisch
- 27: Schwenktischposition quer zur Transportrichtung
- 28: Drehpunkt der Schwenktische
- 29: Schwenktisch
- 30: Drehpunkt der Schwenktische
- 31: Ausschleusband
- 32: Entnahmeroboter
- 33: Saugerspinne
- 34: Zentrierstation
- 35: Schwenktischposition quer zur Transportrichtung
- 36: Ablage
- 37: Industrieroboter
- 38: Schwenkkreis
- 39/40: Förderband
- 41/42: Stapelstation
- 43/44: Stapelroboter
- 45/46: Schwenkkreis
- 47: vorderer Stapelbehälter
- 48: hinterer Stapelbehälter
- 49: Drehtisch
- 50: Stapelbehälter
- 51: Schaltschränke

## Patentansprüche

1. Stapelanlage für Pressen zur Blechumformung, insbesondere zum Stapeln von Karosserieteilen für Kraftfahrzeuge und anderen großen Blechteilen,
**gekennzeichnet durch** folgende Merkmale:
- ein Förderband (5), bestehend aus mehreren streifenförmigen Teilförderbändern, die parallel zu einander lageverstellbar und höhenverstellbar und im Arbeitstakt der Presse(3)angetrieben sind,
- je vier beidseitig des Förderbandes (5) angeordnete Stapelstationen (9;10;11;12),
- vier Stapelroboter (13;14;15;16) mit werkstückangepassten Saugerspinnen (33) für die Stapelstationen (10;12),
- je eine Zentrierstation (34) pro Stapelstation (10;12), die unterhålb der Teilförderbänder (5) angeordnet sind und taktweise arbeitet,
- je eine Behälterbeladestrecke (6), die parallel zu jeder Seite des Förderbandes (5) angeordnet ist und zum Beladen und zum Zuführen von leeren Stapelbehältern (18) dient,
- je eine Behältertransportstrecke (7), die parallel zu jeder Behälterbeladestrecke (6) angeordnet ist und zum Abführen von beladenen Stapelbehältern (18) dient,
- je eine Behältertransportstrecke (8), die parallel zu jeder Behältertransportstrecke (7) angeordnet ist und zum Zuführen von leeren Stapelbehältern ( 18) dient,
- je eine Leerstation (17;19;20) in jeder Behälterbeladestrecke (6) und jeder Behältertransportstrecke (7;8) in Durchlaufrichtung anschließend an die Stapelstationen (9;10;11;12).

2. Stapelanlage nach Anspruch 1,
**gekennzeichnet durch**
je ein Hubgerüst (22;23) für jede Behältertransportstrecke (7;8) zum Stapeln und Entstapeln zweier übereinander gestellter Stapelbehälter (18) in bzw. quer zur Durchlaufrichtung anschließend an die Leerstationen (17;19;20).

3. Stapelanlage nach den Ansprüchen 1 und 2,
**gekennzeichnet durch**
je einen Schwenktisch (26;29) für übereinander gestellte Stapelbehälter (18), dessen Drehachse zwischen nebeneinander liegenden Behältertransportstrecken (7;8) in Durchlaufrichtung anschließend an die Hubgerüste (22;23) liegt.

4. Stapelanlage nach den Ansprüchen 1, 2 und 3,
**gekennzeichnet durch**
je eine Hubdopplung für den gefüllten Behälter (18) der Beladestation (12) bei Start des Behälterwechsels in die Behälterbeladestrecke (6).

5. Stapelanlage nach Anspruch 1,
**gekennzeichnet durch** folgende Merkmale:
- zwei Förderbänder (39;49), die V-förmig zueinander angeordnet sind und an der Presse beginnen,
- zwischen den Förderbändern (39;40) an diese angeordnete Stapelroboter (43;44) mit werkstückangepassten Saugerspinnen,
- jedem Stapelroboter (43;44) zugeordneten Drehtisch (14) für zwei Stapelbehälter (47;48).

6. Stapelanlage nach Anspruch 1 und 5,
**dadurch gekennzeichnet,**
**dass** die beiden Förderbänder (39;40) V-förmig unter einem Winkel von 70 bis 110 Grad zueinander angeordnet sind.

7. Stapelanlage nach den Ansprüchen 1, 5 und 6,
**dadurch gekennzeichnet,**
**dass** an jedem Förderband (39;40) ein oder mehrere Stapelplätze (41;42) vorhanden sind und für jeden Stapelplatz (41;42) an der Innenseite der Förderbänder (39;40) ein Stapelroboter (43;44) mit einem Drehtisch (49) für zwei Stapelbehälter (47;48) zugeordnet ist.

8. Stapelanlage nach den Ansprüchen 1, 5 bis 7,
**dadurch gekennzeichnet,**
**dass** an der Außenseite jedes Förderbandes (39;40) alternativ zu benutzende Handstapelplätze angeordnet sind.

9. Stapelanlage nach den Ansprüchen 1, 5 bis 8,
**dadurch gekennzeichnet,**
**dass** am freien Ende jedes Förderbandes (39;40) ein Ausschleusplatz vorgesehen ist.

10. Stapelanlage nach den Ansprüchen 1, 5 bis 9,
**dadurch gekennzeichnet,**
**dass** an Stelle der Drehtische (49) zweietagige lineare Stapelbehälterzuführstrecken zugeordnet sind.

## Claims

1. A stacker for pressing for sheet pressing, in particular for stacking car body parts for vehicles and other large sheet metal parts, **characterised by** the following features:
- a conveyor belt (5), consisting of several striated partial conveyor belts, which can be position-adjusted parallel to one another and height-adjustable and are driven at the same speed as the press (3),
- four stacking stations (9; 10; 11; 12) arranged on both sides of the conveyor belt (5),
- four stacking robots (13; 14; 15; 16) with component-adjusted suction tools (33) for the stacking stations (10; 12),
- one centring station (34) per stacking station (10; 12), arranged under the partial conveyor belts (5), which works in cycle,
- a container-loading segment (6), which is arranged parallel to each side of the conveyor belt (5) and aids in loading and feeding empty stacking containers (18),
- a container transport segment (7), which is arranged parallel to each container loading segment (6), the function of which is removing loaded stacking containers (18),
- a container transport segment (8), which is arranged parallel to each container transport segment (7), the function of which is advancing empty stacking containers (18),
- an empty station (17; 19; 20) in each container loading segment (6) and each container transport segment (7; 8) in the through direction connecting to the stacking stations (9; 10; 11; 12).

2. The stacker as claimed in Claim 1, **characterised by** a hoist (22; 23) for each container transport segment (7; 8) for stacking and unstacking two superposed stacking containers (18) in or transverse to the through direction connecting to the empty stations (17; 19; 20).

3. The stacker as claimed in Claims 1 and 2, **characterised by** a turntable (26; 29) for superposed stacking containers (18), whereof the axis of rotation between adjacent container transport segments (7; 8) is in the through direction connecting to the hoists (22; 23).

4. The stacker as claimed in Claims 1, 2 and 3, **characterised by** stroke doubling for the filled container (18) of the loading station (12) at the start of the container exchange in the container-loading segment (6).

5. The stacker as claimed in Claim 1, **characterised by** the following features:
- two conveyor belts (39; 49), which are arranged in a V shape relative to one another and begin at the press,
- stacking robots (43; 44) with component-adjusted suction tools arranged between the conveyor belts (39; 40),
- a turntable (14) for two stacking containers (47; 48) assigned to each stacking robot (43; 44).

6. The stacker as claimed in Claim 1 and 5, **characterised in that** both conveyor belts (39; 40) are arranged in a V shape at an angle of 70 to 110° to one another.

7. The stacker as claimed in Claims 1, 5 and 6, **characterised in that** one or more stacking sites (41; 42) are present on each conveyor belt (39; 40) and a stacking robot (43; 44) with a turntable (49) for two stacking containers (47; 48) is assigned for each stacking site (41; 42) on the inside of the conveyor belts (39; 40).

8. The stacker as claimed in Claims 1, 5 to 7, **characterised in that** alternative manual stacking sites are arranged on the outside of each conveyor belt (39; 40).

9. The stacker as claimed in Claims 1, 5 to 8, **characterised in that** an outward transfer place is provided at the free end of each conveyor belt (39; 40).

10. The stacker as claimed in Claims 1, 5 to 9, **characterised in that** two-stage linear stacking container feed segments are assigned in place of the turntables (49).

## Revendications

1. Système d'empilage pour presses de façonnage des tôles, notamment pour l'empilage d'éléments de carrosserie pour véhicules à moteur et d'autres grands éléments en tôle, **caractérisé par** les caractéristiques suivantes :
- un convoyeur à courroie (5) composé de plusieurs convoyeurs à courroies partiels en forme de bande qui sont entraînés parallèlement les uns aux autres, réglables en position et en hauteur et à la même cadence de travail que la presse (3),
- quatre stations d'empilage (9 ;10 ;11 ;12) disposées chacune des deux côtés du convoyeur à courroie (5),
- quatre robots d'empilage (13 ;14 ;15 ;16) avec des pinces aspirantes (33) adaptées à la pièce d'oeuvre pour les stations d'empilage (10 ;12),
- une station de centrage (34) par poste d'empilage (10 ;12) disposé en dessous des convoyeurs à bande partiels (5) et fonctionnant de manière synchronisée,
- un banc de chargement de caisses (6) disposé parallèlement à chaque côté du convoyeur à courroie (5) et destiné au chargement et à l'amenée des caisses d'empilage (18) vides,
- un banc de transport de caisses (7) disposé parallèlement à chaque banc de chargement de caisses (6) et destiné à l'évacuation des caisses d'empilage (18) chargées,
- un banc de transport de caisses (8) disposé parallèlement à chaque banc de transport de caisses (7) et destiné à l'amenée des caisses d'empilage (18) vides,
- une station vacante (17 ;19 ;20) dans chaque banc de chargement de caisses (6) et chaque banc de transport de caisses (7 ;8) disposée dans le sens de passage en machine immédiatement en aval des stations d'empilage (9 ;10 ;11 ;12).

2. Système d'empilage selon la revendication 1, **caractérisé par** un châssis des molettes (22 ;23) pour chaque banc de transport de caisses (7 ;8) pour l'empilage et le désempilage de deux caisses d'empilage (18) superposées, disposé dans ou en travers du sens de passage en machine, immédiatement en aval des stations vacantes (17 ;19 ;20).

3. Système d'empilage selon les revendications 1 et 2, **caractérisé par** une table pivotante (26 ;29) pour caisses d'empilage (18) superposées, dont l'axe de rotation est situé entre des bancs de transport de caisses (7 ;8) adjacents, dans le sens de passage en machine et immédiatement en aval des châssis des molettes (22 ;23).

4. Système d'empilage selon les revendications 1, 2 et 3, **caractérisé par** un doublement de l'élévation pour les caisses remplies (18) de la station de chargement (12) au début du passage des caisses sur le banc de chargement de caisses (6).

5. Système d'empilage selon la revendication 1, **caractérisé par** les caractéristiques suivantes :
- deux convoyeurs à courroie (39 ;49) disposés en V l'un par rapport à l'autre et commençant à la hauteur de la presse,
- entre les convoyeurs à courroie (39 ;40), des robots d'empilage (43 ;44) avec pinces aspirantes adaptées aux pièces d'oeuvre, disposés sur les convoyeurs à courroie,
- une table tournante (14) pour deux caisses d'empilage (47 ;48) affectée à chaque robot d'empilage (43 ;44).

6. Système d'empilage selon la revendication 1 et 5, **caractérisé en ce que** les deux convoyeurs à courroie (39 ;40) sont disposés en V l'un par rapport à l'autre selon un angle de 70 à 110 degrés.

7. Système d'empilage selon les revendications 1, 5 et 6, **caractérisé en ce qu'**il existe un ou plusieurs postes d'empilage (41 ;42) sur chaque convoyeur à courroie (39 ;40), et **en ce qu'**un robot d'empilage (43 ;44) avec une table tournante (49) pour deux caisses d'empilage (47 ;48) est adjoint à chaque poste d'empilage (41 ;42), sur le côté intérieur des convoyeurs à courroie (39 ;40).

8. Système d'empilage selon les revendications 1, 5 à 7, **caractérisé en ce que** des postes d'empilage manuel à utiliser en alternative sont disposés sur le côté extérieur de chaque convoyeur à courroie (39 ;40).

9. Système d'empilage selon les revendication 1, 5 à 8, **caractérisé en ce qu'**un poste d'éclusage est prévu à l'extrémité libre de chaque convoyeur à courroie (39 ;40).

10. Système d'empilage selon les revendication 1, 5 à 9, **caractérisé en ce que** des bancs d'amenée pour caisses d'empilage, linéaires et à deux étages, sont adjoints à la place des tables tournantes (49).
